Europäisches Patentamt

European Patent Office

Office européen des brevets

(19)

(11) **EP 0 737 687 B1**

(12) **FASCICULE DE BREVET EUROPEEN**

(45) Date de publication et mention
de la délivrance du brevet:
**21.11.2001   Bulletin 2001/47**

(51) Int Cl.7: **C07F 7/12**

(21) Numéro de dépôt: **96420113.1**

(22) Date de dépôt: **04.04.1996**

(54) **Procédé de scission des sous-produits de la synthèse directe des alkylchlorosilanes**

Verfahren zur Spaltung von Nebenprodukten aus der Direktsynthese von Alkylchlorsilane

Process for the cleavage of byproducts obtained in the direct process of alkyl chloro silanes

(84) Etats contractants désignés:
**DE FR GB NL**

(30) Priorité: **10.04.1995  FR 9504486**

(43) Date de publication de la demande:
**16.10.1996   Bulletin 1996/42**

(73) Titulaire: **RHODIA CHIMIE**
**92408 Courbevoie Cédex (FR)**

(72) Inventeurs:
  • **Gilbert, Laurent**
    **75015 Paris (FR)**
  • **Laroze, Gilles**
    **69740 Genas (FR)**

(74) Mandataire: **Trolliet, Maurice et al**
**Rhodia Services,**
**Direction de la Propriété Industrielle,**
**40, rue de la Haie-Coq**
**93306 Aubervilliers Cedex (FR)**

(56) Documents cités:
**EP-A- 0 574 912**

  • **JOURNAL OF ORGANOMETTALIC CHEMISTRY,
    vol. 74, 1974, pages 371-376, XP002006061
    CALAS, R. ET AL.: "SCISSION, PAR DES
    COMPOSES A LIAISON P(O) DE LA LIAISON
    SI-SI DES DISILANES POLYCHLORES ISSUS DE
    LA SYNTHESE INDUSTRIELLE DES
    METHYLCHLOROSILANES; OBTENTION DE
    METHYLDICHLOROSILANE"**

Remarques:
Le dossier contient des informations techniques présentées postérieurement au dépôt de la demande et ne figurant pas dans le présent fascicule.

EP 0 737 687 B1

## Description

La présente invention a trait à un procédé de scission des sous-produits lourds issus de la synthèse des alkylchlorosilanes, en particulier des méthylchlorosilanes, notamment pour la scission des alkylchlorodisilanes et en particulier des méthylchlorodisilanes et parmi eux surtout ceux ayant de un à cinq atomes de chlore, par traitement par l'acide chlorhydrique en présence d'un système catalytique.

Les méthylchlorosilanes sont obtenus par action du chlorure de méthyle sur le silicium métal (synthèse directe). Bien que très performante, cette réaction coproduit de nombreux sous-produits lourds, à savoir silylméthylènes, polysilanes, disiloxanes, hydrocarbures et en particulier les méthylchlorodisilanes qui représentent la fraction majoritaire (plus de 80 %). Ces sous-produits n'ont pas de débouchés industriels importants et il est donc intéressant de chercher à les valoriser par la scission de la liaison Si-Si. Certains de ces sous-produits peuvent être valorisés par rétrogradation en monosilanes par le procédé de référence HCl+amine : il s'agit des disilanes ayant au moins deux atomes de chlore sur au moins l'un des atomes de silicium ; ils sont qualifiés de "scindables". Les autres sont les non-scindables : $Me_2ClSi\text{-}SiClMe_2$ (tétraméthyldichlorodisilane symétrique), pentaméthylchlorodisilane, les silylméthylènes, les polysilanes.

De nombreuses études ont déjà été réalisées sur la scission des disilanes et notamment sur la scission par l'acide chlorhydrique en présence d'un système catalytique. Ainsi divers systèmes catalytiques ont déjà été décrits, tels que les amines ou amines tertiaires décrites dans les brevets FR-A-1 119 915 et FR-A-1 447 304 et EP-A-0 574 912 et dans la littérature par R. Calas et al., Journal of Organometalic Chemistry, vol. 71, 1974, pages 371-376 (procédé de référence HCl+amine cité plus haut). Le système catalytique décrit dans ces brevets permet de transformer efficacement le tétrachlorodiméthyldisilane et le trichlo-rotriméthyldisilane et certains tétraméthyldichlorodisilanes mais présente l'inconvénient de ne pas pouvoir scinder tous les disilanes et notamment ne convertit pas le tétraméthyldichlorodisilane symétrique.

Les complexes organométalliques du palladium permettent de résoudre ce problème moyennant l'utilisation de conditions réactionnelles plus dures. De plus, l'emploi d'un tel système catalytique est limité industriellement par la difficulté à recycler un catalyseur homogène. Dans les conditions décrites (H. Matsumoto et al., Bulletin of the Chemical Society of Japan, vol. 51 (6), 1913-1914, 1978) les débits traités restent faibles et les bilans matières sont mauvais.

A ce propos, le brevet US-A-3 772 347 propose de traiter par un halogénure RCl en présence de complexes de métaux de transition, par exemple un complexe phosphine-palladium, éventuellement supporté sur charbon ou gel de silice, conduisant à l'obtention d'environ 25 % en poids d'hydrogénosilanes. Ce procédé décrit la scission du tétraméthyldichlorodisilane avec une durée de réaction de 86 heures.

De même, le brevet US-A-5 210 255 propose d'utiliser en catalyse hétérogène un métal du sous-groupe VIII du tableau périodique (norme IUPAC), tel que platine, palladium, rhodium et ruthénium, en particulier sous forme de catalyseur supporté par exemple sur charbon actif. Le palladium est le métal préféré. L'objectif est semble-t-il d'obtenir des méthylchlorosilanes non hydrogénés. Une comparaison est faite entre le palladium sur charbon et le tétrakis(triphénylphosphine)palladium. Le premier conduit semble-t-il à de bons rendements de rétrogradation des disilanes en monosilanes non hydrogénés, tandis que le deuxième conduit à l'obtention d'un taux important d'hydrogénosilanes $MeHSiCl_2$ et $Me_2HSiCl$ mais avec un mauvais rendement. Les cinétiques de scission sont lentes : temps de contact de plusieurs heures.

La scission thermique en phase vapeur à 500°C décrite dans les brevets US-A-5 292 912, US-A-5 292 902, US-A-5 321 147 et US-A-5 326 896 permet également, en présence de gaz hydrogène, de chlore et/ou d'acide chlorhydrique, de scinder l'ensemble des disilanes sur divers catalyseurs tels que charbon activé, oxydes métalliques, zéolithes ou métaux supportés. A cette température, les réactions sont principalement thermiques et peu d'hydrogénosilanes sont obtenus. D'ailleurs, il est bien connu que les catalyseurs utilisés sont modifiés par réaction des chlorosilanes, ce qui modifiera leurs propriétés catalytiques.

Le besoin existe donc toujours d'un procédé permettant de scinder les sous-produits de la synthèse directe et en particulier le tétraméthyldichlorodisilane symétrique dans des conditions intéressantes industriellement.

La présente invention a donc pour objectif de remédier aux inconvénients de l'art antérieur en fournissant un procédé permettant la scission dans des conditions douces et rapides des sous-produits de la synthèse directe et permettant d'une manière générale la scission de l'ensemble des disilanes, en particulier les méthylchlorodisilanes présentant de un à cinq atomes de chlore, et tout particulièrement du tétraméthyldichlorodisilane symétrique, ainsi que le pentaméthylchlorodisilane, et cela dans des conditions acceptables industriellement.

Un autre objectif de l'invention est aussi de permettre la scission d'autres produits lourds, en particulier de type :

$$(Me)_xCl_ySiCH_2Si(Me)_zCl_t,$$

ou

$$(Me)_x Cl_y SiSi(Me)_w Cl_u [Si(Me)_z Cl_t]_n$$

avec n égal à 1.

où :

x = 0 à 3, y = 0 à 3, avec x + y = 3 ;
z = 0 à 3, t = 0 à 3, avec z + t = 3 ;
w = 0 à 2, u = 0 à 2, avec w + u = 2 ;

et au moins y ou t ou u au moins égal à 1.

Un autre objectif encore de l'invention est de fournir un tel procédé qui conduise à l'obtention d'une quantité appréciable d'hydrogénosilanes industriellement intéressants.

La présente invention a donc pour objet un procédé de scission des sous-produits lourds issus de la synthèse directe des alkylchlorosilanes, en particulier en C1 à $C_6$, notamment pour la scission des alkylchlorodisilanes, par traitement par l'acide chlorhydrique en présence d'un système catalytique caractérisé en ce que ledit traitement est conduit en phase vapeur ou en système triphasique gaz-liquide-solide avec un catalyseur sous forme solide, comprenant au moins un phosphate métallique.

La présente invention est de préférence appliquée à la scission des sous-produits lourds issus de la synthèse des méthylchlorosilanes et tout particulièrement à la scission des méthylchlorodisilanes ayant de un à cinq atomes de chlore.

De préférence, le phosphate métallique comprend un composé d'imprégnation basique, notamment choisi dans le groupe des métaux alcalino-terreux, celui des métaux alcalins, et leurs mélanges (par définition mélanges intra- et/ou intergroupes), de préférence associés à un contre-anion pour assurer la neutralité électrique. Le(s) contre-anions(s) initial(aux), c'est-à-dire avant traitement thermique, peuvent avantageusement être choisis parmi les anions nitrate, sulfate, chlorure, fluorure, hydrogénophosphate, phosphate, dihydrogénophosphate, hydrogénosulfate, oxalate, acétate, benzoate, etc. Les anions peuvent être d'une seule espèce ou être constitués d'un mélange d'espèces ; pour des raisons de simplicité, on préfère n'avoir qu'une seule espèce ou famille d'espèce. La teneur du catalyseur en composé d'imprégnation (ou agent dopant) est de préférence telle que le pourcentage pondéral en composé d'imprégnation basique, exprimé notamment en élément alcalin et/ou alcalino-terreux, par rapport au phosphate métallique sec est compris entre 0 et 25 %, avantageusement entre 3 et 15 %.

De préférence, le phosphate métallique comprend un métal choisi dans le groupe consistant en métaux monovalents, divalents, trivalents, y compris de terres rares, tétravalents et pentavalents.

De préférence encore, le phosphate métallique répond à la formule :

$$M(XPO_4)_y$$

dans laquelle M représente le métal choisi parmi :

- les métaux monovalents, auquel cas X est 2H et y = 1
- les métaux divalents, auquel cas X est H et y = 1
- les métaux trivalents, tels que notamment Al, B, Fe, Ga et métaux de terres rares (lanthanides ayant un numéro atomique de 57 à 71, y compris le lanthane, notamment lanthanides tels que cités ci-dessus, ainsi que l'yttrium et le scandium), auquel cas X est absent et y = 1
- les métaux tétravalents, tels que notamment Zr , Ti, etc., auquel cas X est H et y = 2
- les métaux pentavalents, tels que notamment Nb, Ta, etc., auquel cas X est O et y = 1.

Dans une forme de réalisation particulièrement préférée, l'invention prévoit d'utiliser un phosphate métallique basé sur l'emploi de terre rare trivalente. Le phosphate métallique répond alors avantageusement à la formule :

$$MPO_4$$

dans laquelle :

- M représente :

  . une terre rare trivalente $M_3$, ou
  . un mélange d'au moins une terre rare trivalente $M_3$ et d'au moins un élément choisi dans le groupe consistant en métaux alcalins $M_1$ et métaux alcalino-terreux $M_2$ avec la relation :

$$M = aM_1 + bM_2 + cM_3 \text{ et } a+2b+3c = 3$$

- a est un coefficient compris entre 0 et 3, avantageusement entre 0,01 et 0,5, préférentiellement entre 0,05 et 0,2,
- b est un coefficient compris entre 0 et 3/2, avantageusement entre 0 et 1/3 ou bien 1 + ou - 0,1, et
- c est un coefficient compris entre 0 et 1, avantageusement supérieur ou égal à 1/3, de préférence à 1/2.

On préfère alors que le phosphate métallique comprenne en plus un composé d'imprégnation, si bien que sa formule devient :

$$MPO_4(Im)_p$$

dans laquelle :

- Im correspond à un composé d'imprégnation basique constitué d'un métal choisi dans le groupe consistant en métaux alcalino-terreux, métaux alcalins et leurs mélanges, associés de préférence à un contre-anion pour assurer la neutralité électrique, et
- p est inférieur à 0,5, notamment compris entre 0,04 et 0,25.

De préférence,

- $M_1$ est choisi dans le groupe des éléments de la colonne 1A, de préférence les métaux alcalins tels que lithium, sodium, potassium, rubidium, césium, et leurs mélanges,
- $M_2$ est choisi dans le groupe des éléments de la colonne 2A, de préférence les métaux alcalino-terreux tels que béryllium, magnésium, calcium, strontium, baryum, et leurs mélanges,
- $M_3$ est choisi dans le groupe des terres rares trivalentes choisies parmi les lanthanides, l'yttrium et le scandium, et leurs mélanges, les lanthanides étant de préférence lanthane, cérium, praséodyme, néodyme, samarium, europium, gadolinium, terbium, dysprosium, holmium, erbium, thulium, ytterbium et lutécium.

Par définition, on se réfère à la classification des éléments publiée dans le Bulletin de la Société Chimique de France, n° 1, 1966.

En général, M est de préférence constitué d'au plus trois éléments et ce pour des raisons de commodité. Pour les mêmes raisons, il peut être économiquement intéressant d'utiliser des mélanges commerciaux de terres rares sous quelque formes qu'ils soient, dès lors qu'ils conduisent aisément aux composés selon l'invention.

Les phosphates métalliques selon l'invention peuvent être préparés par imprégnation du phosphate, notamment du composé de formule $MPO_4$, avec une solution ou une suspension d'$Im_p$ dans un solvant volatil, tel que l'eau de préférence.

Les résultats sont d'autant meilleurs qu'$Im_p$ est plus soluble et que le phosphate, notamment $MPO_4$, est plus fraîchement fabriqué.

Ainsi, un procédé avantageux de préparation des phosphates de formule $MPO_4(Im)_p$ consiste :

  a) à réaliser la synthèse du composé $MPO_4$, puis, de préférence sans séparer $MPO_4$ du milieu réactionnel,
  b) à introduire l'imprégnant $Im_p$ dans le milieu réactionnel,
  c) à séparer l'éventuel liquide résiduel d'avec le solide réactionnel,
  d) à sécher et éventuellement calciner.

Si l'on se réfère aux techniques générales de préparation de phosphates (telles que décrites notamment dans "PASCAL P., Nouveau traité de chimie minérale" tome X (1956), pages 821-823 et dans "GMELINS, Handbuch der anorganischen Chemie" (8ème édition) volume 16 (C), pages 202-206 (1965), on peut distinguer deux voies principales d'accès aux phosphates. D'une part, la précipitation d'un sel soluble du métal (chlorure, nitrate) par l'hydrogénophosphate d'ammonium ou l'acide phosphorique et traitement de finition avec de l'ammoniaque, puis éventuellement un complément de neutralisation. D'autre part, la réaction de l'oxyde de métal avec de l'acide phosphorique à chaud. Dans les deux cas on peut envisager un traitement de finition avec un hydroxyde alcalin.

Les phosphates desdits métaux peuvent être également préparés par chamottage (réaction solide-solide) de leurs sels avec des sels de phosphore, puis calcination.

Le produit est ensuite séché selon les techniques classiques connues de l'homme du métier. Il se fait avantageusement entre 50°C et 200°C, pendant une période allant de préférence de 2 à 8 heures, sous atmosphère normale ou sous pression réduite ou par lyophilisation. Le produit séché peut être ensuite calciné à une température comprise entre 200°C et 1000°C, de préférence entre 400°C et 700°C, pendant une durée variant de 1 à 15 heures, de préférence de 3 à 6 heures.

Pour la préparation des phosphates dopés/ imprégnés selon l'invention, on pourra aussi se référer aux demandes de brevet EP-A-0 440 555 et EP-A-0 599 688 qui sont incorporées ici par référence.

Le procédé de scission est conduit en phase vapeur (gaz HCl et produits à scinder vaporisés) ou en système triphasique gaz-liquide-solide (gaz HCl, produits à scinder en solution), le catalyseur étant dans les deux cas sous forme solide. Il peut être mis en oeuvre soit en continu, soit en discontinu (batch) avec accumulation ou distillation en continu des produits de la réaction.

Le catalyseur utilisé peut, dans le cas du procédé en phase vapeur, être disposé en lit fixe ou être mis en oeuvre en lit fluidisé, notamment en mélange avec des inertes, afin d'augmenter la surface de contact, ou, dans le cas du procédé en système triphasique, être mis en oeuvre en suspension (slurry).

Le procédé de scission est généralement mis en oeuvre à une température de 100°C à 500°C. Dans le cas des disilanes comprenant deux atomes de chlore ou plus par atome de silicium, la température peut être comprise entre 100°C et 300°C. Pour les autres disilanes ou produits lourds, la température de réaction est avantageusement comprise entre 300, de préférence 350°C, et 500°C. Lorsqu'on utilise un mélange de l'ensemble des produits lourds on peut également observer des réactions de scission de produits lourds ou ne comprenant pas deux atomes de chlore par atomes de silicium même à plus basse température par exemple de 200°C. Lors d'une mise en oeuvre en phase vapeur, le temps de contact, défini comme le rapport entre le volume du catalyseur et le débit total gazeux (disilane + acide chlorhydrique + gaz vecteur) à la température choisie, varie habituellement de 0,01 seconde à 50 secondes et le plus souvent de 0,1 seconde à 10 secondes.

La pression n'est pas critique. Elle se situe généralement de la pression atmosphérique à 10 MPa (100 bars) et de préférence de la pression atmosphérique à 1,5 MPa (15 bars).

Le rapport molaire entre l'acide chlorhydrique et l'ensemble des disilanes peut être compris entre 0,1 et 100, de préférence entre 0,5 et 10. On peut également utiliser un gaz vecteur inerte dont la pression partielle représente entre 0 et 10 % de l'ensemble du flux gazeux. Le vecteur gazeux inerte peut être constitué par un gaz ou un mélange de gaz inerte dans les conditions réactionnelles, comme par exemple l'argon, l'azote, etc.

Lors d'une mise en oeuvre en suspension (slurry), le catalyseur peut être mis en suspension dans un mélange des disilanes et autres produits lourds issus de la synthèse directe, mais également dans un solvant organique inerte de haut point d'ébullition, compris entre 80°C et 300°C. Le solvant organique est choisi pour ses capacités à solubiliser les disilanes. A titre de solvant inerte on peut citer les carboxamides cycliques, les nitriles aliphatiques ou aromatiques, les éthers, etc. Les monosilanes produits peuvent être distillés en continu au cours de leur formation ou être récupérés en fin de réaction.

La mise en oeuvre en phase vapeur et en lit fixe est préférée et conduit remarquablement à une scission performante du tétraméthyldichlorodisilane symétrique avec un temps de contact avantageusement très court, de l'ordre de quelques secondes, par exemple de 2 secondes environ, voire moins. Cette mise en oeuvre conduit aussi, de manière tout à fait remarquable, à une scission extrêmement performante des autres méthylchlorodisilanes. Ainsi, des taux de transformation (de scission) de 99 à 100 % ont été atteints pour le traitement de mélanges de triméthyltrichlorodisilane + diméthyltétrachlorodisilane, avec des temps de contact très courts, de 3 et 0,6 secondes respectivement. Des taux de transformation similaires ont été obtenus avec un mélange de type industriel comprenant les trois susdits disilanes. Les temps de réaction très courts représentent un gros avantage sur le plan industriel, en particulier en ce qui concerne le réacteur qui peut dont être de très petite taille tout en traitant un volume important.

L'invention présente un autre avantage remarquable dans le fait que la scission performante du tétraméthyldichlorodisilane symétrique s'accompagne de la production d'hydrogénosilane $Me_2HSiCl$ qui est actuellement le composé ayant la plus grande valeur commerciale.

Pour la mise en oeuvre en suspension, on préfère que le catalyseur soit imprégné. La durée de réaction est de l'ordre de quelques minutes à quelques heures, notamment comprise entre 5 min et 5 h, en particulier entre 30 min et 2 h.

Le procédé selon l'invention présente en outre l'avantage de permettre l'obtention d'hydrogénosilanes $Me_2HSiCl$ et $MeHSiCl_2$.

Les exemples suivants illustrent l'invention.

**EXEMPLES**

**Préparation du phosphate de lanthane :**

**Exemple 1 :**

On introduit dans un réacteur, 106 g de $H_3PO_4$ (à 85 % vendu par la société Prolabo), soit 0,92 mole dans 800 ml d'eau désionisée.

On agite à 500-700 tours/minute.

On introduit 299 g de $La_2(CO_3)_3$, $12H_2O$ à froid, soit 0,8 mole de lanthane dans 736 ml d'eau), lentement et sous forte agitation.

On chauffe ensuite le milieu réactionnel jusqu'à 80°C, pendant 2 heures trente.

On laisse refroidir jusqu'à température ambiante sans agitation pendant une demi-heure et on finit dans un bain d'eau froide.

La suspension est filtrée sur un verre fritté n° 3 jusqu'à épuisement des eaux-mères.

Le produit est alors redispersé dans deux litres d'eau, sous forte agitation et laissé en suspension pendant une demi-heure, tout en maintenant l'agitation.

La suspension est filtrée sur un verre fritté n° 3 jusqu'à épuisement des eaux-mères. Le produit est remis en dispersion dans 900 ml d'eau désionisée et neutralisé par une solution d'ammonique jusqu'à un pH égal à 9.

Le produit est filtré, lavé à l'eau et centrifugé avant d'être séché à 110°C.

Une partie du produit ainsi obtenu est ensuite calcinée 4 heures à 400°C.

**Exemple 2 :**

Le produit préparé selon l'exemple 1, séché à 110°c, est calciné 4 heures à 700°C.

**Préparation du phosphate de lanthane dopé par un sel d'un métal alcalin :**

**Exemple 3 :**

On prélève 7,8 ml d'une solution 6M de CsOH, à laquelle on ajoute 23,5 ml d'une solution 1M de $H_3PO_4$. On ajoute alors la quantité d'eau nécessaire pour compléter à 50 ml. On prend 50 g de produit préparé dans l'exemple 1 que l'on place dans un bécher de 200 ml. On introduit goutte à goutte 20 ml de la solution d'imprégnation précédemment préparée en homogénéïsant bien. On laisse le produit reposer une heure. On le sèche une nuit à 110°C et on le calcine 2 heures à 500°C.

Teneur en césium sur sec = 5 %.

**Exemple 4 :**

On procède comme dans l'exemple 2 à l'aide d'une solution d'imprégnation préparée à partir de 15,7 ml d'une solution 6M de CsOH et 23,5 ml d'une solution 2M de $H_3PO_4$.

Teneur en césium sur sec = 10 %.

**Exemple 5 :**

On procède comme dans l'exemple 2 à l'aide d'une solution d'imprégnation préparée à partir de 16,3 ml d'une solution 6M de CsOH et 24 ml d'une solution 4M de $H_3PO_4$.

Teneur en césium sur sec = 13 %.

**Exemple 6 :**

On procède comme dans l'exemple 2 à l'aide d'une solution d'imprégnation préparée à partir de 4,7 ml d'une solution 6M de KOH et 14,1 ml d'une solution 1M de $H_3PO_4$.

Teneur en potassium sur sec = 0,88 %.

**Exemple 7 :**

On introduit dans un réacteur, 182,4 g de $H_3PO_4$ (à 85 % vendu par la société Prolabo), soit 1,6 mole dans 640 ml d'eau désionisée.

On chauffe le milieu réactionnel jusqu'à 85°C et, quand la température est atteinte, on introduit 260,8 g de $La_2O_3$ (soit 0,8 mole de lanthane) de façon régulière (14 g toutes les 5 minutes). On laisse chauffer le mélange réactionnel 1 heure à 85°C, puis on laisse refroidir jusqu'à température ambiante sous agitation.

On additionne ensuite sous forte agitation une solution 1M de CsOH jusqu'à obtenir une solution de pH 9.

Le produit est récupéré par centrifugation (3 600 tours/minutes), puis redispersé dans 400 ml d'eau désionisée. Le produit ainsi lavé est récupéré par centrifugation. Cette opération de lavage est répétée quatre fois suivant la même procédure. Le produit ainsi lavé est séché à 110°C, puis calciné 4 heures à 500°C.

**Exemple 8 : préparation de l'hydrogénophosphate de zirconium :**

Dans un réacteur muni d'un réfrigérant et d'une agitation à encre, on introduit 93 ml d'$H_3PO_4$ 10,33 M. Ensuite, à l'aide d'un bain d'huile sur une plaque chauffante où la régulation de température est faite à l'aide d'un thermomètre à contact, on porte $H_3PO_4$ à ébullition (agitation 300 trs/minute). A ce moment là, on introduit 0,064 mole de sulfate de zirconium. Le produit pâteux devient jaune pèle (en 1/2 h). Puis on descend la température à 80°C et on laisse 48 heures. Après refroidissement, on récupère le produit obtenu, que l'on centrifuge 25 minutes. Le produit est lavé une première fois à l'eau chaude (80°C), puis à l'eau froide jusqu'à ce que les eaux de lavage aient un pH de 4. Séchage sous vide pendant 40 heures.

**Exemple 9 : préparation de l'hydrogénophosphate de calcium :**

On dissout dans un bécher 106,6 g de $Ca(NO_3)_2$ dans 300 ml $H_2O$ (pH solution environ 7). On introduit ensuite à un débit de 1,2 litre/heure une solution de $(NH_4)_2HPO_4$ dans $H_2O$ permutée (m= 145,2 g dans 300 ml $H_2O$). Le produit précipite. On finit l'introduction et on rajoute 50 ml $H_2O$ (rinçage des tuyaux de la pompe). On laisse ensuite sous agitation à température ambiante pendant 4 heures. 413,7 g de suspension sont prélevés. On centrifuge ensuite pendant 20 minutes (pH eaux mères = 6,7). On fait un lavage avec 500 ml $H_2O$, agitation pendant 20 minutes. Centrifugation, lavage (pH eaux de lavage = 7,8). On sèche, puis on calcine 3 heures à 500°C.

A - Les exemples 10 à 13 illustrent une mise en oeuvre en système triphasique, en réacteur travaillant par lot (batch), le catalyseur étant maintenu en suspension (slurry).

**Mode opératoire général**

Dans un réacteur tricol muni d'un réfrigérant ascendant, d'une arrivée de gaz et d'une mesure de température, après avoir balayé le montage sous azote pendant une heure, on charge le disilane et le catalyseur, puis on commence à chauffer, toujours sous courant d'azote.

Lorsque le reflux est atteint (145-150°C), l'arrivée d'azote est coupée et on alimente en acide chlorhydrique. Lors de l'arrêt de la réaction, l'arrivée d'HCl est coupée, puis le montage est purgé sous azote.

L'analyse des produits de la réaction est réalisée par chromatographie en phase gazeuse (CPG).

On calcule ainsi pour chaque essai :

- le taux de transformation (TT) : % de disilane transformé par rapport au disilane introduit
- les sélectivés en monosilanes par normalisation à 100.

**Exemples 10 à 13 :**

tableau 1 : taux de transformation
tableau 2 : monosilanes formés (sélectivité par normalisation à 100)

tableau 1

| Exemple | Catalyseur | Disilane | Pourcentage massique de catalyseur par rapport au disilane | Durée (heure) | HCl (équiva-lent) | Taux de transformation (%) |
|---|---|---|---|---|---|---|
| 10 | $Zr(HPO_4)_2$ préparé selon l'exemple 8 | $Me_2ClSi-SiCl_2Me$ 27 % $MeCl_2Si-SiCl_2Me$ 61 % | 4 | 3,5 | 12 | global : 16 $Me_2ClSi-SiCl_2Me$ : 19 $MeCl_2Si-SiCl_2Me$ : 14 |
| 11 | $LaPO_4$ $Cs_2$ HP $O_4$ 13 % p/p Cs préparé selon l'exemple 5 | $Me_2ClSi-SiCl_2Me$ 27 % $MeCl_2Si-SiCl_2Me$ 61 % | 4 | 3,5 | 12 | global : 18 $Me_2ClSi-SiCl_2Me$ : 24 $MeCl_2Si-SiCl_2Me$ : 15 |
| 12 | $LaPO_4$,Cs préparé selon l'exemple 7 | $Me_2ClSi-SiCl_2Me$ 27 % $MeCl_2Si-SiCl_2Me$ 61 % | 13 | 3,5 | 12 | global : 19 $Me_2ClSi-SiCl_2Me$ : 26 $MeCl_2Si-SiCl_2Me$ : 17 |
| 13 | $LaPO_4$,$K_2HPO_4$ 0,88 % p/p K préparé selon l'exemple 8 | $Me_2ClSi-SiCl_2Me$ 27 % $MeCl_2Si-SiCl_2Me$ 61 % | 4 | 3,5 | 12 | global : 0,5 |

EP 0 737 687 B1

tableau 2

| Exemple | Catalyseur | TT (%) | $Me_2SiCl_2$ | $MeSiCl_3$ | $Me_3SiCl$ | $MeHSiCl_2$ | autres |
|---|---|---|---|---|---|---|---|
| 10 | $Zr(HPO_4)_2$ | 16 | 27 | 35 | 1 | 8 | 29 |
| 11 | $LaPO_4,Cs_2HPO_4$ 13 % p/p Cs | 18 | 35 | 34 | 3 | 3 | 25 |
| 12 | $LaPO_4,Cs$ | 19 | 40 | 40 | 3 | 2 | 15 |
| 13 | $La\ PO_4,K_2HPO_4$ 0,88 % p/p K | 0,5 | 29 | 31 | – | – | 40 |

B - Les exemples 14 à 26 suivants illustrent une mise en oeuvre en phase vapeur en lit fixe.

**Mode opératoire général :**

Les catalyseurs seront testés suivant le mode opératoire suivant sauf mention contraire :

Dans un réacteur disposé verticalement (tube de quartz de longueur 15 cm et de diamètre 2 cm), on charge successivement 5 cm$^3$ de quartz, le catalyseur, puis 5 cm$^3$ de quartz. Le catalyseur est conditionné à la température choisie pour la réaction, par passage pendant deux heures d'un courant d'azote (2 litres/heure dans les conditions normales de pression et de température).

Les chlorodisilanes sont alors injectés par l'intermédiaire d'un pousse-seringue. Le débit est ajusté pour obtenir le temps de contact choisi pour chaque expérience. Après une mise en régime d'environ 15 minutes, l'essai dure généralement 1 heure. Les produits sortant du réacteur sont piégés dans un récepteur refroidit par un bain d'eau maintenu à 0°C. L'analyse des produits de la réaction est réalisée par chromatographie en phase gazeuse (CPG).

On calcule ainsi pour chaque essai :

-   le taux de transformation (TT) : % de disilane transformé par rapport au disilane introduit,
-   les sélectivités en monosilanes par normalisation à 100.

**Exemples 14 à 20 :** essais de scission de $Me_2ClSi-SiClMe_2$ (85 % p/p) :

     tableau 3 : taux de transformation
     tableau 4 : monosilanes formés (sélectivité par normalisation à 100)

**Exemples 21 à 25 :** essais de scission de $Me_2ClSi-SiCl_2Me$ (27%) + $MeCl_2Si-SiCl_2Me$ (61 %)

     tableau 5 : taux de transformation
     tableau 6 : monosilanes formés (sélectivité par normalisation à 100)

**Exemple 26** : essai de scission d'un mélange de type industriel : $Me_2ClSi-SiClMe_2$ (25% p/p)+ $Me_2ClSi-SiCl_2Me$ (22 % p/p) + $MeCl_2Si-SiCl_2Me$ (49 % p/p)

     tableau 7 : taux de transformation
     tableau 8 : monosilanes formés (sélectivité par normalisation à 100).

**Essais de scission de $Me_2ClSi–SiClMe_2$ (89 % p/p)**

Tableau 3

| Exemple | Catalyseur | Température (°C) | HCl (équivalent) | Tps de contact (seconde) | Taux de transformation (%) |
|---------|-----------|-----------------|------------------|--------------------------|----------------------------|
| 14 | quartz porosité 0 | 400 | 5 | – | 0 |
| 15 | $LaPO_4$ préparé selon l'ex. 2 | 400 | 5 | 2 | 23 |
| 16 | $LaPO_4$ $Cs_2HPO_4$ (5 % p/p Cs) préparé selon l'ex. 3 | 400 | 5 | 2 | 33 |
| 17 | $LaPO_4$, $Cs_2HPO_4$ (10 % p/p Cs) préparé selon l'ex. 4 | 400 | 5 | 2 | 54 |
| 18 | $LaPO_4$,$Cs_2HPO_4$ (13 % p/p Cs) préparé selon l'ex. 5 | 435 | 21 | 0,5 | 12 |
| 19 | $LaPO_4$,$K_2HPO_4$ (0,88 % p/p K) préparé selon l'ex. 6 | 400 | 5 | 2 | 15 |
| 20 | $ZR(HPO_4)_2$ préparé selon l'ex. 8 | 400 | 5 | 2 | 14 |

EP 0 737 687 B1

Tableau 4

| Exemple | Catalyseur | TT (%) | $Me_2SiCl_2$ | $MeSiCl_3$ | $Me_3SiCl$ | $MeHSiCl_2$ | $Me_2HSiCl$ | Autres |
|---|---|---|---|---|---|---|---|---|
| 15 | $LaPO_4$ | 23 | 70 | 18 | – | 2 | 2 | 8 |
| 16 | $LaPO_4$, $Cs_2H PO_4$ (5 % p/p Cs) | 33 | 81 | 4 | – | – | 15 | 0 |
| 17 | $LaPO_4$, $Cs_2HPO_4$ (10 % p/p Cs) | 54 | 89 | – | – | – | 6 | 5 |
| 18 | $LaPO_4$, $Cs_2HPO_4$ (13 % p/p Cs) | 12 | 76 | – | – | – | 16 | 8 |
| 19 | $LaPO_4$, $K_2HPO_4$ (0,88 % p/p Cs) | 15 | 78 | 10 | – | – | 11 | 1 |
| 20 | $Zr(HPO_4)_2$ | 14 | 75 | 4 | 1 | 1 | 5 | 14 |

EP 0 737 687 B1

**Essais de scission de Me$_2$ClSi-SiCl$_2$Me(27 %) + MeCl$_2$Si-SiCl$_2$Me(61 %)**

Tableau 5

| Exemple | Catalyseur | Température ( C) | HCl (équivalent) | Temps de contact (seconde) | Taux de transformation (%) |
|---------|-----------|-----------------|------------------|----------------------------|----------------------------|
| 21 | quartz porosité 0 | 200 | 5 | - | 0 |
| 22 | LaPO$_4$ préparé selon l'ex. 1 | 200 | 5 | 3 | global : 2 |
| 23 | LaPO$_4$ préparé selon l'ex. 2 | 200 | 5 | 3 | global : 3 |
| 24 | LaPO$_4$,Cs$_2$HPO$_4$ (5 % p/p Cs) préparé selon l'ex. 3 | 200 | 5 | 3 | global : 3 |
| 25 | LaPO$_4$,Cs$_2$HP$_2$O$_4$ (5 % p/p Cs) préparé selon l'ex. 3 | 200 | 5 | 0,6 | Me$_2$ClSi-SiCl$_2$Me : 99 MeCl$_2$Si-SiCl$_2$Me : 99 |

Tableau 6

| Exemple | Catalyseur | TT (%) | Me₂-SiCl₂ | MeSiCl₃ | Me₃SiCl | MeHSiCl₂ | Me₂HSiCl | Autres |
|---------|------------|--------|-----------|---------|---------|----------|----------|--------|
| 22 | LaPO₄ | 2 | 24 | 45 | – | 26 | – | 5 |
| 23 | LaPO₄ | 3 | 24 | 46 | – | 25 | – | 5 |
| 24 | LaPO₄, Cs₂HPO₄ (5 % p/p Cs) | 100 | 17 | 60 | 1 | 22 | – | 0 |
| 25 | LaPO₄, Cs₂HPO₄ (5 % p/p Cs) | 99 | 17 | 43 | 1 | 39 | – | 0 |

**Essais de scission de Me$_2$ClSi-SiClMe$_2$ (25 % p/p) + Me$_2$ClSi-SiCl$_2$Me (22 % p/p) + MeCl$_2$Si-SiCl$_2$Me (49 % p/p)**

Tableau 7

| Exemple | Catalyseur | Température (°C) | HCl (équivalent) | Temps de contact (seconde) | Taux de transformation (%) |
|---|---|---|---|---|---|
| 26 | LaPO$_4$,Cs$_2$HPO$_4$ (5 % p/p Cs) préparé selon l'exemple 3 | 200 | 5 | 3 | Me$_2$ClSi-SiCl$_2$Me : 5<br>Me$_2$ClSi-SiCl$_2$Me : 95<br>MeCl$_2$Si-SiCl$_2$Me : 100 |

Tableau 8

| Exemple | Catalyseur | Me$_2$Si Cl$_2$ | MeSiCl$_3$ | Me$_3$SiCl | MeHSiCl$_2$ | Me$_2$HSiCl | Autres |
|---|---|---|---|---|---|---|---|
| 34 | LaPO$_4$, Cs$_2$HPO$_4$ (5 % p/p Cs) | 20 | 61 | 1 | 18 | - | 0 |

EP 0 737 687 B1

**Revendications**

1. Procédé de scission des sous-produits lourds issus de la synthèse des alkylchlorosilanes, notamment en $C_1$ à $C_6$, plus particulièrement des méthylchlorosilanes, notamment pour la scission des alkylchlorodisilanes, en particulier des méthylchlorodisilanes ayant de un à cinq atomes de chlore, par traitement par l'acide chlorhydrique en présence d'un système catalytique, **caractérisé en ce que** ledit traitement est conduit en phase vapeur ou en système triphasique gaz-liquide-solide avec un catalyseur sous forme solide, comprenant au moins un phosphate métallique.

2. Procédé selon la revendication 1, **caractérisé en ce que** le phosphate métallique comprend un composé d'imprégnation basique.

3. Procédé selon la revendication 2, **caractérisé en ce que** le composé d'imprégnation basique est choisi dans le groupe des métaux alcalino-terreux, des métaux alcalins, et leurs mélanges, de préférence associés à un contre-anion pour assurer la neutralité électrique.

4. Procédé selon la revendication 2 ou 3, **caractérisé en ce que** le pourcentage pondéral en composé d'imprégnation basique par rapport au phosphate métallique sec est compris entre 0 et 25 %, avantageusement entre 3 et 15 %.

5. Procédé selon l'une quelconque des revendications 1 à 4, **caractérisé en ce que** le phosphate métallique comprend un métal choisi dans le groupe consistant en métaux monovalents, divalents, trivalents, y compris de terres rares, tétravalents et pentavalents.

6. Procédé selon la revendication 5, **caractérisé en ce que** le phosphate métallique répond à la formule :

$$M(XPO_4)_y$$

dans laquelle M représente le métal choisi parmi:

- les métaux monovalents, auquel cas X est 2H et y = 1
- les métaux divalents, auquel cas X est H et y = 1
- les métaux trivalents, auquel cas X est absent et y = 1
- les métaux tétravalents, auquel cas X est H et y = 2
- les métaux pentavalents, auquel cas X est O et y = 1.

7. Procédé selon la revendication 6, **caractérisé en ce que** le phosphate métallique répond à la formule :

$$MPO_4$$

dans laquelle :

- M représente :

  . une terre rare trivalente $M_3$, ou
  . un mélange d'au moins une terre rare trivalente $M_3$ et d'au moins un élément choisi dans le groupe consistant en métaux alcalins $M_1$ et métaux alcalino-terreux $M_2$ avec la relation :

$$M = aM_1 + bM_2 + cM_3 \text{ et } a+2b+3c = 3$$

- a est un coefficient compris entre 0 et 3, avantageusement entre 0,01 et 0,5,
- b est un coefficient compris entre 0 et 3/2, avantageusement entre 0 et 1/3, et
- c est un coefficient compris entre 0 et 1, avantageusement supérieur ou égal à 1/3.

8. Procédé selon la revendication 7, **caractérisé en ce que** a est compris entre 0,05 et 0,2 et/ou b est 1 + ou - 0,1 et/ou c est supérieur ou égal à 1/2.

9. Procédé selon la revendication 7 ou 8, **caractérisé en ce que** le phosphate métallique comprend en plus un composé d'imprégnation, si bien que sa formule devient :

$$MPO_4(Im)_p$$

dans laquelle :

- Im correspond à un composé d'imprégnation basique constitué d'un métal choisi dans le groupe consistant en métaux alcalino-terreux, métaux alcalins et leurs mélanges, associés de préférence à un contre-anion pour assurer la neutralité électrique, et
- p est inférieur à 0,5, notamment compris entre 0,04 et 0,25.

10. Procédé selon l'une quelconque des revendications 7 à 9, **caractérisé en ce que** :

- $M_1$ est choisi dans le groupe consistant en lithium, sodium, potassium, rubidium, césium et leurs mélanges,
- $M_2$ est choisi dans le groupe consistant en béryllium, magnésium, calcium, strontium, baryum et leurs mélanges,
- $M_3$ est choisi dans le groupe consistant en lanthanides, yttrium, scandium et leurs mélanges.

11. Procédé selon l'une quelconque des revendications 1 à 10, **caractérisé en ce que** le traitement est conduit à une température comprise entre 100 et 500°C, de préférence entre 350 et 500°C.

12. Procédé selon la revendication 11, **caractérisé en ce que** le traitement est conduit à une température comprise entre 100 et 300°C pour la scission des disilanes ayant deux atomes de chlore ou plus par atome de silicium.

13. Procédé selon l'une quelconque des revendications 1 à 12, **caractérisé en ce que** le traitement est conduit en phase vapeur, avec catalyseur solide en lit fixe ou fluidisé.

14. Procédé selon la revendication 13, **caractérisé en ce que** le temps de contact est compris entre 0,01 et 50 secondes, notamment entre 0,1 et 10 secondes.

15. Procédé selon l'une quelconque des revendications 1 à 12, **caractérisé en ce que** le traitement est conduit en système triphasique gaz-liquide-solide avec catalyseur solide en suspension.

16. Procédé selon la revendication 15, **caractérisé en ce que** le temps de contact est compris entre 5 min et 5 heures, notamment entre 30 min et 2 heures.

**Patentansprüche**

1. Verfahren zur Spaltung der schweren Nebenprodukte, die aus der Synthese von insbesondere $C_1$- bis $C_6$-Alkylchlorsilanen, spezieller von Methylchlorsilanen stammen, insbesondere für die Spaltung von Alkylchlordisilanen, insbesondere von Methylchlordisilanen mit eins bis fünf Chloratomen, durch Behandlung mit Salzsäure in Gegenwart eines katalytischen Systems, **dadurch gekennzeichnet, dass** besagte Behandlung in der Gasphase oder in einem dreiphasigen System Gas - Flüssigkeit - Feststoff mit einem Katalysator in fester Form, der wenigstens ein Metallphosphat umfasst, ausgeführt wird.

2. Verfahren gemäß Anspruch 1, **dadurch gekennzeichnet, dass** das Metallphosphat eine basische Verbindung zum Imprägnieren umfasst.

3. Verfahren gemäß Anspruch 2, **dadurch gekennzeichnet, dass** die basische Verbindung zum Imprägnieren aus der Gruppe der Erdalkalimetalle, Alkalimetalle und ihren Gemischen, vorzugsweise verbunden mit einem Gegenanion, um die elektrische Neutralität zu wahren, ausgewählt ist.

4. Verfahren gemäß Anspruch 2 oder 3, **dadurch gekennzeichnet, dass** der Gewichtsprozentsatz an basischer Verbindung zum Imprägnieren, bezogen auf das trockene Metallphosphat, zwischen 0 und 25%, vorteilhafterweise zwischen 3 und 15% liegt.

**17**

5. Verfahren gemäß einem der Ansprüche 1 bis 4, **dadurch gekennzeichnet, dass** das Metallphosphat ein Metall umfasst, das aus der Gruppe ausgewählt ist, die aus einwertigen, zweiwertigen, dreiwertigen, einschließlich Seltene Erden, vierwertigen und fünfwertigen Metallen besteht.

6. Verfahren gemäß Anspruch 5, **dadurch gekennzeichnet, dass** das Metallphosphat der Formel:

$$M(XPO_4)_y$$

entspricht, in der M das Metall darstellt, das ausgewählt ist unter.

- den einwertigen Metallen, wobei X 2H ist und y = 1
- den zweiwertigen Metallen, wobei X H ist und y = 1
- den dreiwertigen Metallen; wobei X nicht vorhanden ist und y = 1
- den vierwertigen Metallen, wobei X H ist und y = 2
- den fünfwertigen Metallen, wobei X 0 ist und y = 1.

7. Verfahren gemäß Anspruch 6, **dadurch gekennzeichnet, dass** das Metallphosphat der Formel:

$$MPO_4$$

entspricht, in der:

- M darstellt:

  - eine dreiwertige Seltene Erde $M_3$ oder
  - ein Gemisch von wenigstens einer dreiwertigen Seltenen Erde $M_3$ und wenigstens einem Element, das aus der Gruppe ausgewählt ist, die aus Alkalimetallen $M_1$ und Erdalkalimetallen $M_2$ besteht, mit der Beziehung:

$$M = aM_1 + bM_2 + cM_3 \text{ und } a + 2b + 3c = 3$$

  - a ist ein Koeffizient zwischen 0 und 3, vorteilhafterweise zwischen 0,01 und 0,5,
  - b ist ein Koeffizient zwischen 0 und 3/2, vorteilhafterweise zwischen 0 und 1/3 und
  - c ist ein Koeffizient zwischen 0 und 1, vorteilhafterweise größer oder gleich 1/3.

8. Verfahren gemäß Anspruch 7, **dadurch gekennzeichnet, dass** a zwischen 0,05 und 0,2 liegt und/oder b 1 + oder - 0,1 ist und/oder c größer oder gleich 1/2 ist.

9. Verfahren gemäß Anspruch 7 oder 8, **dadurch gekennzeichnet, dass** das Metallphosphat außerdem eine Verbindung zum Imprägnieren umfasst, so dass seine Formel:

$$MPO_4(Im)_p$$

wird, in der:

- Im einer basischen Verbindung zum Imprägnieren entspricht, die aus einem Metall besteht, das aus der Gruppe ausgewählt ist, die aus Erdalkalimetallen, Alkalimetallen und ihren Gemischen, vorzugsweise verbunden mit einem Gegenanion, um die elektrische Neutralität zu wahren, besteht, und
- p kleiner 0,5 ist, insbesondere zwischen 0,04 und 0,25 liegt.

10. Verfahren gemäß einem der Ansprüche 7 bis 9, **dadurch gekennzeichnet, dass**:

- $M_1$ aus der Gruppe ausgewählt ist, die aus Lithium, Natrium, Kalium, Rubidium, Cäsium und ihren Gemischen besteht,

- $M_2$ aus der Gruppe ausgewählt ist, die aus Beryllium, Magnesium, Calcium, Strontium, Barium und ihren Gemischen besteht,
- $M_3$ aus der Gruppe ausgewählt ist, die aus Lanthaniden, Yttrium, Scandium und ihren Gemischen besteht.

11. Verfahren gemäß einem der Ansprüche 1 bis 10, **dadurch gekennzeichnet, dass** die Behandlung bei einer Temperatur zwischen 100 und 500 °C, vorzugsweise zwischen 350 und 500 °C ausgeführt wird.

12. Verfahren gemäß Anspruch 11, **dadurch gekennzeichnet, dass** die Behandlung bei einer Temperatur zwischen 100 und 300 °C für die Spaltung von Disilanen mit zwei Chloratomen oder mehr pro Siliciumatom ausgeführt wird.

13. Verfahren gemäß einem der Ansprüche 1 bis 12, **dadurch gekennzeichnet, dass** die Behandlung in der Gasphase mit festem Katalysator im Fest- oder Fließbett ausgeführt wird.

14. Verfahren gemäß Anspruch 13, **dadurch gekennzeichnet, dass** die Kontaktzeit zwischen 0,01 und 50 Sekunden, insbesondere zwischen 0,1 und 10 Sekunden liegt.

15. Verfahren gemäß einem der Ansprüche 1 bis 12, **dadurch gekennzeichnet, dass** die Behandlung in einem dreiphasigen System Gas - Flüssigkeit - Feststoff mit festem Katalysator in Suspension ausgeführt wird.

16. Verfahren gemäß Anspruch 15, **dadurch gekennzeichnet, dass** die Kontaktzeit zwischen 5 min und 5 Stunden, insbesondere zwischen 30 min und 2 Stunden liegt.

**Claims**

1. Process for cleaving heavy by-products derived from the synthesis of alkylchlorosilanes, in particular $C_1$ to $C_6$ alkylchlorosilanes, more particularly methylchlorosilanes, especially for the cleavage of alkyl-chlorodisilanes, in particular methylchlorodisilanes having from one to five chlorine atoms, by treatment with hydrochloric acid in the presence of a catalytic system, **characterized in that** the said treatment is carried out in the vapour phase or in the gas-liquid-solid three-phase system with a catalyst in solid form comprising at least one metal phosphate.

2. Process according to Claim 1, **characterized in that** the metal phosphate comprises a basic impregnation compound.

3. Process according to Claim 2, **characterized in that** the basic impregnation compound is chosen from the group of alkaline-earth metals, alkali metals, and mixtures thereof, preferably associated with a counter-anion in order to ensure the electrical neutrality.

4. Process according to Claim 2 or 3, **characterized in that** the weight percentage of basic impregnation compound relative to the dry metal phosphate is between 0 and 25 %, advantageously between 3 and 15 %.

5. Process according to any one of Claims 1 to 4, **characterized in that** the metal phosphate comprises a metal chosen from the group consisting of monovalent, divalent and trivalent metals, including rare earth metals, tetravalent and pentavalent metals.

6. Process according to Claim 5, **characterised in that** the metal phosphate corresponds to the formula:

$$M(XPO_4)_y$$

in which M represents a metal chosen from:

- monovalent metals, in which case X is 2H and y = 1
- divalent metals, in which case X is H and y = 1
- trivalent metals in which case X is absent and y = 1
- tetravalent metals, in which case X is H and y = 2
- pentavalent metals, in which case X is O and y = 1.

7. Process according to claim 6, **characterized in that** the metal phosphate corresponds to the formula:

$$MPO_4$$

in which:

- M represents

  · a trivalent rare earth metal $M_3$, or
  · a mixture of at least one trivalent rare earth metal $M_3$ and at least one element chosen from the group consisting of alkali metals $M_1$ and alkaline-earth metals $M_2$ with the relationship:

$$M = aM_1 + bM_2 + cM_3 \text{ and } a+2b+3c = 3$$

- a is a coefficient between 0 and 3, advantageously between 0.01 and 0.5,
- b is a coefficient between 0 and 3/2, advantageously between 0 and 1/3, and
- c is a coefficient between 0 and 1, advantageously greater than or equal to 1/3.

8. Process according to Claim 7, **characterized in that** a is between 0.05 and 0.2 and/or b is $1 \pm 0.1$ and/or c is greater than or equal to 1/2.

9. Process according to Claim 7 or 8, **characterized in that** the metal phosphate also comprises an impregnation compound, such that its formula consequently becomes:

$$MPO_4(Im)_p$$

in which:

- Im corresponds to a basic impregnation compound consisting of a metal chosen from the group consisting of alkaline-earth metals, alkali metals and mixtures thereof, preferably associated with a counter-anion in order to ensure the electrical neutrality, and
- p is less than 0.5, in particular between 0.04 and 0.25.

10. Process according to any one of Claim 7 to 9, **characterized in that**:

- $M_1$ is chosen from the group consisting of lithium, sodium, potassium, rubidium and caesium, and mixtures thereof,
- $M_2$ is chosen from the group consisting of beryllium, magnesium, calcium, strontium and barium, and mixtures thereof.
- $M_3$ is chosen from the group consisting of lanthanides, yttrium and scandium, and mixtures thereof.

11. Process according to any one of Claims 1 to 10, **characterized in that** the treatment is carried out at a temperature of between 100 and 500°C, preferably between 350 and 500°C.

12. Process according to Claim 11, **characterized in that** the treatment is carried out at a temperature of between 100 and 300°C for the cleavage of disilanes having two or more chlorine atoms per silicon atom.

13. Process according to any one of Claim 1 to 12, **characterized in that** the treatment is carried out in the vapour phase, with a solid catalyst in a fixed or fluidized bed.

14. Process according to Claim 13, **characterized in that** the contact time is between 0.01 and 50 seconds, in particular between 0.1 and 10 seconds.

15. Process according to any one of Claims 1 to 12, **characterized in that** the treatment is carried out in a gas-liquid-solid three-phase system with a solid catalyst in suspension.

16. Process according to Claim 15, **characterized in that** the contact time is between 5 min and 5 hours, in particular between 30 min and 2 hours.